# FASCICULE DE BREVET EUROPEEN

(11) **EP 3 344 524 B1**
(45) Date de publication et mention de la délivrance du brevet: **14.08.2019**
(21) Numéro de dépôt: 16775765.7
(22) Date de dépôt: 02.09.2016
(51) Int. Cl.: B62D 29/04, F16B 5/01, B62D 27/02, F16B 11/00

(54) **PROCÉDÉ D'ASSEMBLAGE DE PANNEAUX D'UNE STRUCTURE SANDWICH EN MATÉRIAUX COMPOSITES, DE DURÉE RÉDUITE**
VERKÜRZTES VERFAHREN ZUR MONTAGE VON SANDWICHBAUPLATTEN AUS VERBUNDSTOFF
REDUCED-DURATION METHOD FOR ASSEMBLING COMPOSITE MATERIAL SANDWICH STRUCTURE PANELS

(30) Priorité: 03.09.2015 FR 1558167; 03.09.2015 FR 1558171
(43) Date de publication de la demande: 11.07.2018
(73) Titulaire: Gazelle Tech, 33290 Blanquefort (FR)
(72) Inventeur: LAVAUD, Gaël, 33800 Bordeaux (FR); DUBOC, Marc, 33160 Saint Médard en Jalles (FR)
(74) Mandataire: IP Trust
(86) Numéro de dépôt international: PCT/FR2016/052175
(87) Numéro de publication internationale: WO 2017/037398

(56) Documents cités:
- EP-A1- 2 524 857
- FR-A1- 2 732 301
- US-A- 5 041 318

## Description

### DOMAINE TECHNIQUE DE L'INVENTION

L'invention concerne le domaine des procédés d'assemblage de panneaux d'une structure sandwich en matériaux composites.

L'invention concerne plus particulièrement les procédés d'assemblage de panneaux agencés pour constituer la carrosserie et/ou le châssis d'un véhicule automobile ou de navigation et auxquels doivent être fixés des équipements du véhicule tels que les ceintures de sécurité ou les organes fonctionnels du véhicule tels que les amortisseurs, le train roulant, le moteur.

### ETAT DE LA TECHNIQUE

On a déjà utilisé dans l'industrie automobile, de telles structures sandwich en matériaux composites constituées de plusieurs panneaux à assembler pour former la caisse d'un véhicule.

Notamment, le document FR 2 732 301 concerne un procédé d'assemblage de panneaux de structure sandwich incluant chacun deux peaux 2, 3 par exemple en fibres imprimées de résine, qui sont séparées par un noyau léger en mousse ou nid d'abeilles 4, et assemblées ensemble par collage à leur périphérie pour enfermer entre elles ledit noyau.

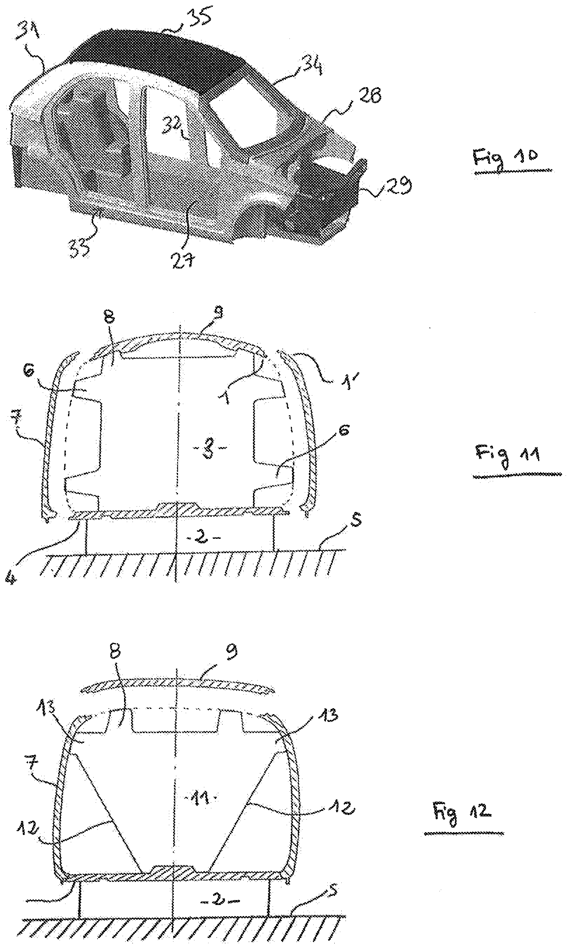

Selon ce procédé, conformément aux figures 11 et 12, les panneaux sont chacun pourvus de décrochements 1, 1' présentant la même pente afin que les deux profils puissent venir en coïncidence l'un avec l'autre, l'aile du premier panneau reposant sur la paroi du deuxième panneau, et l'aile du deuxième panneau reposant sur la paroi du premier panneau. Une couche de colle assure la fixation des deux panneaux entre eux.

Les différents panneaux constitutifs de la carrosserie sont assemblés autour de deux types de dispositifs qui les supportent.

Le dispositif de la figure 11 se compose essentiellement d'un gabarit inférieur 2 reposant sur le sol S et sur lequel est placé le panneau plancher 4 du véhicule et d'un gabarit supérieur 3 qui vient se placer par dessus le plancher. La face supérieure du gabarit 2 et la face inférieure du gabarit 3 ont des formes correspondant aux faces du plancher avec lesquelles elles sont en contact.

Le gabarit supérieur 3 comporte en outre des butées latérales 6 (deux de chaque côté) sur lesquelles viennent en appui les panneaux côtés d'habitacle 7 et des butées supérieures 8 sur lesquelles vient en appui le panneau pavillon 9. La forme et les dimensions des gabarits 2, 3 et des butées 6 , 8 sont telles que les éléments de structure soient en contact les uns avec les autres et puissent être collés les uns aux autres lorsqu'ils sont en appui sur les butées.

Dans le mode de réalisation de la figure 12, le gabarit supérieur 11 présente deux parties inclinées 12 qui s'écartent du plan médian longitudinal du véhicule de bas en haut. Dans ce cas, il n'y a qu'une seule butée latérale 13 à la partie supérieure du gabarit.

Ce procédé d'assemblage présente globalement satisfaction pour l'assemblage des panneaux mais contraint à l'utilisation de gabarits fixes qui augmentent le coût et restreignent la mise en oeuvre du procédé au lieu de localisation des dits gabarits.

Certains autres procédés requièrent des pions de centrage pour positionner les pièces entre elles.

Ou encore des systèmes de serrage externes au panneau, qui permettent de garder les pièces en contact pendant l'opération de collage, ou bien encore par exemple dans le nautisme, il arrive que l'on positionne les deux pièces à assembler puis que l'on stratifie l'ensemble.

Par ailleurs, ce type de structure à panneaux en matériaux composite sandwich pose de nombreux problèmes lorsque l'on veut y fixer des éléments, tels que par exemple les charnières de portières latérales et d'hayon arrière et les gâches de leurs serrures, les bras de suspension, support moteur, les poignées de maintien internes à l'habitacle, les supports de ceinture de sécurité ou tout autre élément devant être solidement fixé à la structure, surtout lorsque ces éléments subissent des contraintes importantes, variables ou répétées.

On connaît déjà plusieurs méthodes pour poser un élément sur ce type de structure sandwich, qui consistent généralement à fixer un insert sur un panneau de ladite structure, ledit élément étant à son tour fixé sur la partie de l'insert qui fait saillie à l'extérieur du panneau au moyen d'une vis traversant l'insert dans son épaisseur. Plus précisément, l'insert est disposé dans le noyau du matériau et est ensuite recouvert des mêmes peaux stratifiées que le panneau.

Ces inserts sont toutefois très couteux et longs à mettre en place dans les moules de fabrication des panneaux, quelle que soit la méthode utilisée :
Une première méthode consiste à fixer l'insert à travers l'une des peaux du panneau avant le moulage du noyau.

Une autre méthode consiste, après moulage du noyau, à usiner l'une des peaux du panneau et à sertir l'insert à travers celle-ci.

Une autre méthode encore consiste à localement réunir les deux peaux du panneau et à insérer une vis à travers la zone à double paroi ainsi formée pour serrer l'ensemble avec un écrou par exemple.

Les deux premières méthodes n'assurent pas un ancrage suffisamment solide de l'insert à travers le panneau car la fixation se fait sur une seule peau.

La troisième méthode offre une meilleure résistance car la fixation se fait à travers les deux peaux d'un même panneau, mais l'insert fait saillie du panneau de chaque côté, ce qui peut poser de nombreux problèmes, notamment si la pose doit se faire à l'aveugle, et l'une des parties extérieurement saillantes de l'insert reste inutilisée, pouvant provoquer des blessure ou une gêne.

Ainsi, dans le document FR 2 744 182 a-t-on proposé pour fixer un insert à une telle structure, de coller ensemble deux panneaux sandwich suivant un plan de joint périphérique, et d'insérer un insert avant collage dans le plan de joint dans un évidemment accueillant partiellement cet insert, pratiqué dans l'un des panneaux. Il a été choisi selon un mode de réalisation préféré, de doter le plan de joint d'une forme en escalier avec une contremarche inclinée ou sensiblement perpendiculaire par rapport au plan des panneaux, de façon, d'après ce document, que les efforts exercés au niveau du plan de joint par les éléments qui y sont fixés ne soient pas parallèles à la force de collage.

Cependant, quelle que soit la méthode utilisée, les efforts générés par l'élément fixé sont localisés à l'intérieur du composite, ce qui oblige à multiplier les vis de fixation et sollicitent ce matériau composite dans le sens de l'arrachement des peaux et de la mousse et lui confèrent ainsi une durée de vie limitée.

Dans le cas du brevet FR2744182, il est également dommageable de devoir mettre une découpe de panneau sur les points d'entrée d'efforts sur le châssis pour y mettre l'insert. On crée ainsi des points de faiblesses et sollicite la colle plutôt que le panneau qui a une résistance moindre que les peaux en composite.

La présente invention a donc pour but premier d'éliminer les inconvénients précités et de proposer un nouveau procédé pour assembler les panneaux composites sandwich en matériaux composites, les uns les autres.

### OBJET DE L'INVENTION

L'invention répond à ce besoin en proposant une structure autoportante formée par l'assemblage d'au moins deux panneaux de structure sandwich en matériaux composites
Selon l'invention, cette structure autoportante est formée par l'assemblage d'au moins deux panneaux de structure sandwich en matériaux composites, ces deux panneaux présentant respectivement deux parties d'assemblage aux profils complémentaires dotées chacune d'au moins un moyen de serrage des panneaux le long des profils complémentaires, ces moyens de serrage pouvant occuper un état actif de serrage maximum des deux panneaux, les parties d'assemblage étant profilées de façon que lorsque les moyens de serrage occupent l'état actif, les deux panneaux emboîtés présentent une forme tridimensionnelle correspondant à celle de ces deux panneaux dans la structure à réaliser, et forment une sous structure autoportante.

L'invention peut par ailleurs présenter l'une et/ou l'autre des caractéristiques suivantes, seules ou en combinaison :
- les moyens de serrage comprennent des organes complémentaires de serrage.
- les organes complémentaires de serrage sont sécables au-delà d'un seuil d'effort prédéterminé
- au moins l'un des deux moyens de serrage complémentaires est formé d'une seule pièce avec le panneau.
- lorsque les moyens de serrage complémentaires sont des organes de serrage complémentaires, tels qu'une vis et un filetage, chaque partie d'assemblage de panneau comprend un insert de passage de l'organe actif, et au moins l'un des deux panneaux comprend une entrée d'accès à la tête de l'organe actif de serrage débouchant sur l'insert de passage du panneau considéré et accessible depuis une paroi extérieure du panneau, l'insert de l'autre panneau étant pourvu d'un filetage interne.
- les parties d'assemblage des deux panneaux comprennent chacune une entrée d'accès à la tête de l'organe actif de serrage débouchant sur l'insert qui est pourvu d'un filetage pour les deux panneaux.
- les extrémités complémentaires des deux panneaux présentent des profils incluant au moins un chanfrein.
- les parties d'assemblage des deux panneaux présentent des profils complémentaires définissant une partie mâle et une partie femelle.
- les moyens de serrage comprennent des cales d'écartement des deux panneaux fixées sur les extrémités en regard des deux panneaux à assembler. Ces cales peuvent être en matériau souple permettant de réaliser une étanchéité de la cavité intérieure pour pouvoir y injecter de la colle qui va remplir la cavité).
- la structure comprend une colle comme moyen de fixation définitif des panneaux à assembler comblant l'espace existant entre les deux parties d'assemblage des deux panneaux.
- la structure comprend différents panneaux assemblés au moins deux à deux, et formant un ensemble de châssis et de carrosserie montée sur le châssis, d'un véhicule.

L'invention concerne également un panneau de structure sandwich en matériaux composites constitutif de la structure ci-dessus comprenant un filetage interne et une entrée débouchant au sein de ce filetage accessible depuis la peau extérieure du panneau, et une partie d'assemblage pourvue d'un profil de positionnement.

L'invention concerne également un procédé d'assemblage d'au moins deux panneaux selon la revendication précédente, pour former une structure tridimensionnelle autoportante, dans lequel :
- on forme une série de panneaux à assembler successivement, avec pour les deux parties de panneaux successifs à assembler se retrouvant en regard l'une de l'autre, des profils complémentaires d'assemblage autoportant, et des moyens complémentaires de serrage
- on assemble un premier panneau avec le panneau successif en emboîtant les profils complémentaires des parties à assembler et en déplaçant les moyens de serrage à leur état actif pour former une sous structure autoportante,
- on fixe définitivement un panneau à un autre, de préférence immédiatement après la formation de la sous-structure auto portante.
- on assemble de la même façon les autres panneaux jusqu'à l'obtention de la structure désirée.

L'invention concerne également un véhicule tel qu'un véhicule automobile pourvu de la structure à châssis et carrosserie composite et d'équipements fonctionnels fixés à celle ci au moyen d'organes de montage.

Ledit organe de montage peut être fixé selon le procédé dans lequel un organe de montage d'un élément susceptible de solliciter le panneau suivant une direction principale D, comprend une pièce rigide définissant au moins une embase fixée en surface respectivement d'au moins une paroi du panneau et un insert doté de moyens d'accroche de l'élément, solidarisé à la pièce rigide, la paroi du panneau à la surface de laquelle est fixée l'embase de la pièce rigide, étant sensiblement parallèle à la direction de sollicitation du panneau par l'élément ou présentant une inclinaison inclinée d'un angle respectivement de plus ou moins α = 20°, de préférence α = 10°par rapport à cette direction D.

La direction principale D est la direction suivant laquelle la force exercée par l'équipement sur le panneau est optimale pour réaliser efficacement une action de traction/compression sur le panneau.

Ce procédé peut présenter l'une et/ou l'autre des caractéristiques suivantes :
- la pièce rigide comprend au moins deux embases fixées en surface respectivement d'au moins deux parois du panneau, les deux parois du panneau à la surface desquelles sont fixées les embases de la pièce rigide, étant sensiblement parallèles à la direction de sollicitation du panneau par l'élément ou présentant une inclinaison inclinée d'un angle respectivement de plus ou moins α = 20°, de préférence α = 10°par rapport à cette direction D. Il est préférable d'avoir deux embases pour éviter de créer un moment de rotation qui ferait travailler la peau sur laquelle est fixé l'organe de fixation, en compression et arrachement. Il est également possible d'avoir trois embases.
- les deux parois du panneau à la surface desquelles sont fixées les embases de la pièce rigide, sont sensiblement parallèles à la direction de sollicitation du panneau par l'élément ou présentent une inclinaison inclinée d'un angle respectivement de plus ou moins α = 20°, de préférence α = 5 ou 10°par rapport à cette direction D.
- les embases de la pièce rigide sont parallèles l'une de l'autre ou peuvent avoir un léger angle d'inclinaison l'une vis à vis de l'autre, par exemple entre 5 et 20°, pour faciliter le montage
- les embases de la pièce rigide divergent l'une de l'autre en direction opposée à la partie intermédiaire.
- la pièce rigide et l'insert précité forment une seule pièce.
- l'insert comprend une chape, un bossage, un crochet et/ou une bride pour permettre la fixation de l'élément sur le panneau.
- lorsque l'insert comprend une chape, les deux branches opposées de la chape constituent les embases de la pièce rigide et la partie centrale à orifice de la chape, forme le moyen d'accroche de l'élément.
- la pièce rigide présente une section en escalier définissant deux marches et une contremarche et le panneau est pourvu d'un bord périphérique de forme complémentaire, l'insert étant fixé sur la surface externe de la pièce rigide, opposée au panneau.
- lorsque l'insert est une chape, la tranche latérale de la chape est fixée en surface de la contremarche et/ou les tranches d'extrémité de ses branches sont fixées en surface de la marche adjacente.
- la pièce rigide comprend deux plaques rigides formant respectivement les deux embases fixées en surface des deux parois du panneau, prolongées chacune par une partie de plaque à fixer sur l'insert.
- lorsque l'insert est une chape est une chape, les deux tranches latérales de la chape sont fixées en surface des deux parties de plaque.
- la pièce rigide et/ou l'organe de montage sont également fixés en surface d'un bord frontal du panneau.
- la fixation des embases en surface respectivement des deux parois du panneau s'effectue par collage.

L'invention concerne également un panneau de structure sandwich en matériaux composites tel que décrit ci-dessus, et pourvu d'un organe de montage d'un élément susceptible de solliciter le panneau suivant une direction principale D, l'organe de montage comprenant une pièce rigide définissant au moins une embase fixée en surface respectivement d'au moins une paroi du panneau et un insert doté de moyens d'accroche de l'élément, solidarisé à la pièce rigide, la paroi du panneau à la surface de laquelle est fixée l'embase de la pièce rigide, étant sensiblement parallèle à la direction de sollicitation du panneau par l'élément ou présentant une inclinaison inclinée d'un angle respectivement de plus ou moins α = 20°, de préférence α = 10°par rapport à cette direction D.

L'invention concerne également un ensemble incluant le panneau ci-dessus, un équipement du véhicule à fixer sur le panneau, un organe de montage de cet élément, comprenant un axe s'étendant selon une direction principale D et susceptible de solliciter le panneau suivant une direction principale D, l'organe de montage comprenant une pièce rigide définissant au moins une embase fixée en surface respectivement d'au moins une paroi du panneau et un insert doté de moyens d'accroche de l'élément, solidarisé à la pièce rigide, la paroi du panneau à la surface de laquelle est fixée l'embase de la pièce rigide, étant sensiblement parallèle à la direction de sollicitation du panneau par l'élément ou présentant une inclinaison inclinée d'un angle respectivement de plus ou moins α = 20°, de préférence α = 10°par rapport à cette direction D.

### BREVE DESCRIPTION DES FIGURES

D'autres objets et avantages de l'invention apparaîtront au cours de la description qui suit, faite en référence aux dessins annexés, dans lesquels :
La figure 1 représente une vue en coupe illustrant les parties d'assemblage de deux panneaux pourvu de profils adaptés et de moyens de serrage des deux profils complémentaires, permettant de doter les deux panneaux lorsque mis en contact pour autoriser le transfert des efforts, d'une forme tridimensionnelle semblable à celle de ces panneaux dans la structure finale à réaliser,
- La figure 2 est une vue analogue à celle de la figure 1 pour un second mode de réalisation de l'assemblage
- Les figures 3 à 10 représentent les étapes successives du procédé d'assemblage de panneaux formant un châssis et une carrosserie de véhicule automobile
- Les figures 11 et 12 précitées représentent le procédé d'assemblage de panneaux selon l'art antérieur, rendant nécessaire l'utilisation de gabarits,
la figure 13 représente une vue en perspective d'un premier mode de réalisation du montage d'un organe mécanique de fixation d'un équipement sur un panneau de structure sandwich, selon l'invention
- la figure 14 illustre une vue en perspective d'un deuxième mode de réalisation du montage d'un organe mécanique de fixation d'un équipement sur un panneau de structure sandwich, selon l'invention
- la figure 15 représente par une vue schématique de côté, le montage de l'organe mécanique de fixation de la figure 1, sans l'axe de fixation à l'équipement,
- les figures 16 à 19 illustrent respectivement quatre variantes de réalisation du montage selon l'invention.

Pour plus de clarté, les éléments identiques ou similaires des différents modes de réalisation sont repérés par des signes de référence identiques sur l'ensemble des figures.

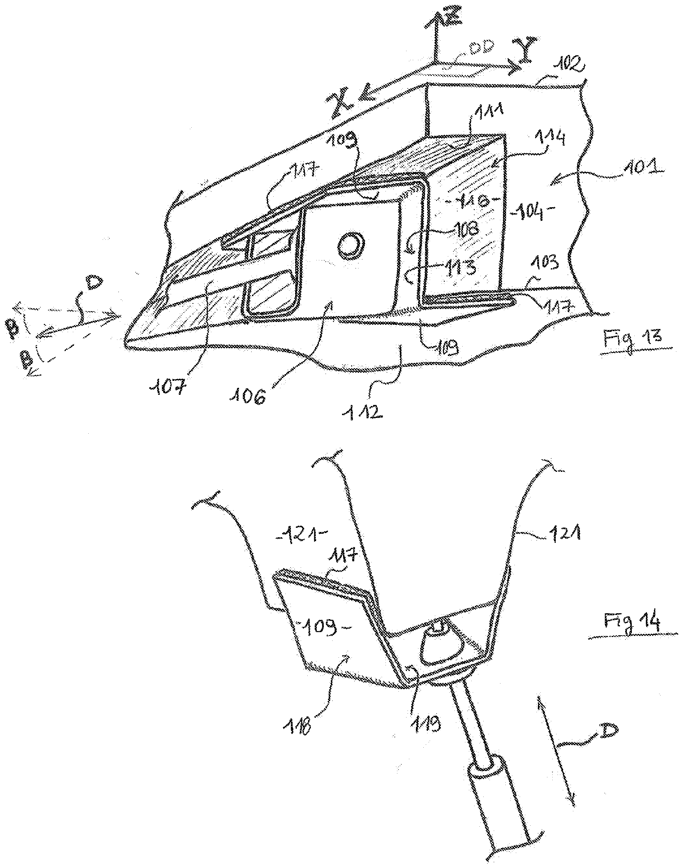

Les modes de réalisations montrés dans les figures 13 à 19 ne font pas partie de l'invention revendiquée.

### DESCRIPTION DETAILLEE DES FIGURES

En référence à la figure 10, l'invention concerne une structure autoportante pour véhicule automobile, formant le châssis et la carrosserie du véhicule, à partir de l'assemblage de différents panneaux de structure sandwich en matériaux composites.

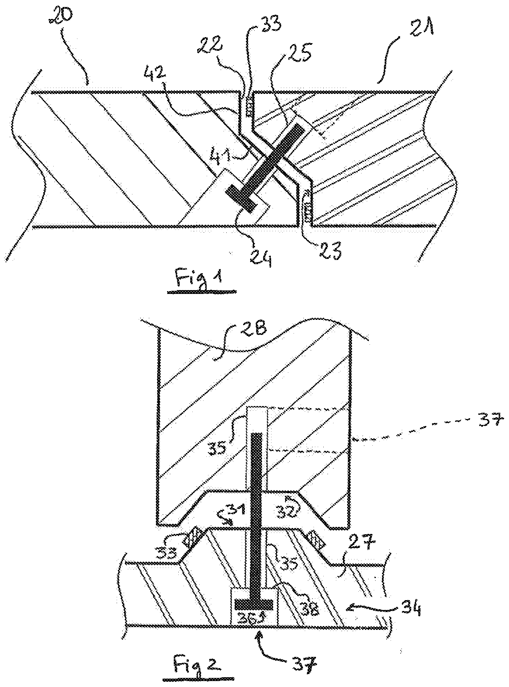

Selon l'invention, deux panneaux à assembler l'un à l'autre 20, 21 conformément aux figures 1 et 2, comprennent des parties d'assemblage aux profils complémentaires 22, 23 dotées respectivement de deux moyens de serrage complémentaires 24, 25 pouvant occuper un état actif de serrage des deux panneaux selon les profils complémentaires des deux parties d'assemblage.

Les parties d'assemblage sont profilées de façon que lorsque les moyens de serrage occupent l'état actif, les deux panneaux sont en contact suivant le plan de contact formé par les profils complémentaires en contact l'un de l'autre ou par l'intermédiaire de cales d'écartement, et présentent alors une forme tridimensionnelle semblable à celle de ces panneaux dans la structure finale à réaliser et forment, une fois définitivement solidarisés l'un à l'autre, une sous structure autoportante.

Ainsi, la mise en oeuvre du procédé d'assemblage selon l'invention réside principalement dans la définition de différentes portions de carrosserie et de châssis, formant toutes ensembles la carrosserie et le châssis d'un véhicule, et pouvant former une série de panneaux dont chacun peut être assemblé à un ou un ensemble de panneau(x) précédemment installé(s).

On décrit dans ce qui suit un exemple de définition de portions de carrosserie et de portions de châssis d'un véhicule à former, et un exemple d'assemblage de celles ci.

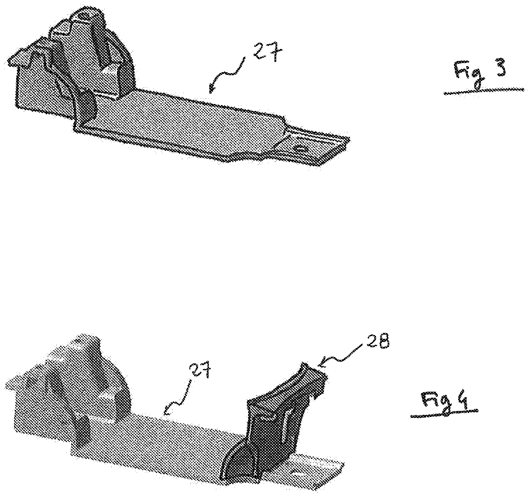

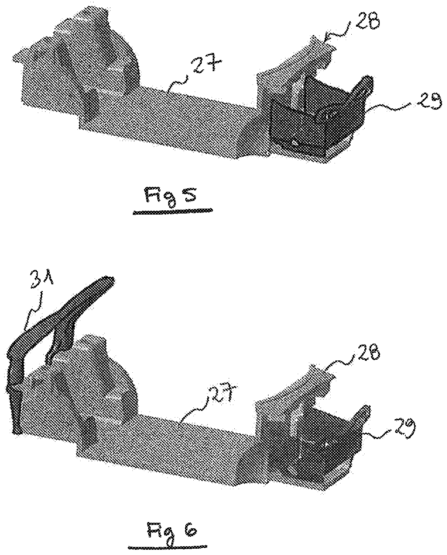

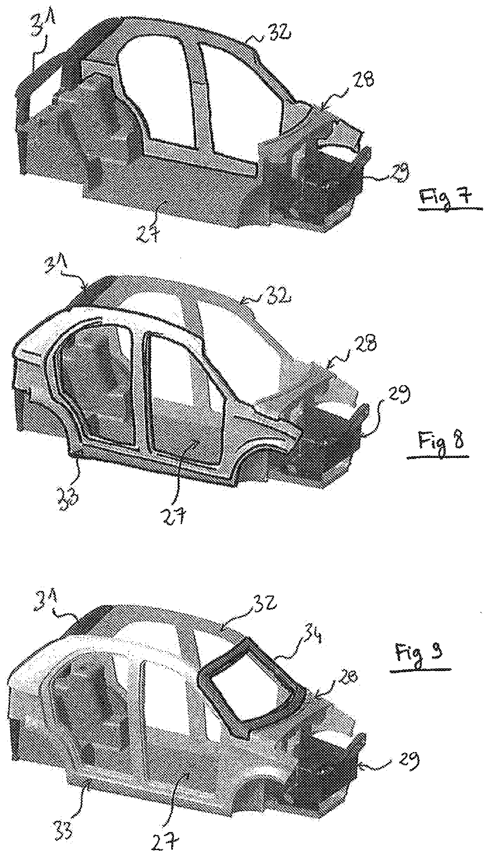

Conformément à l'exemple illustré sur les figures 3 à 10, ces panneaux sont successivement :
- le plancher du véhicule 27 (figure 3)
- le pare-close 28 (figure 4)
- l'unité avant 29 (figure 5)
- les montants arrières 31 (figure 6)
- les deux flans de carrosserie 32, 33 (figures 7 et 8)
- l'encadrement du pare-brise 34 (figure 9)
- le toit 35 (figure 10)

Conformément à la figure 4, on assemble le pare-close 28 sur le plancher 27 du véhicule qui seront respectivement munis, l'un sur sa tranche inférieure, l'autre sur sa face supérieure, de profils complémentaires à l'image par exemple de ceux représentés sur la figure 2.

En référence à cette figure 2, le panneau formant le plancher 27 peut être muni d'un bossage 31 vu en coupe sur la figure s'étendant sur la largeur ou la longueur de la partie assembler du pare-close 28, qui sera quant à lui pourvu d'une rainure de forme complémentaire 32.

Ce bossage présente dans l'exemple représenté en section transversale une forme trapézoïdale définissant deux chanfreins convergeant en direction du pare-close, reliés par une petite base, et ainsi, une partie mâle.

Les deux pans inclinés du bossage sont pourvus de cales d'écartement 33 constitués d'un matériau souple tel qu'un joint caoutchouc qui maintiennent un écart entre les deux panneaux lorsque les moyens de serrage occupent leur état actif dans lequel ils autorisent une venue en contact des deux panneaux, via les cales d'écartement 33.

Les calles d'écartement 33 peuvent également remplir une fonction d'étanchéité lorsque les moyens de serrage occupent leur état actif, facilitant ainsi l'injection de colle dans des profils étanches pour la fixation définitive de la sous-structure autoportante.

Dans l'autre exemple de réalisation illustré sur la figure 1 pour le serrage de deux panneaux s'étendant dans le même plan, un autre type de profils complémentaires est proposé. Celui-ci comprend un chanfrein central 41 et deux pans latéraux verticaux 42 sur lesquels sont fixés les cales d'écartement 33.

Les moyens de serrage complémentaires 34 incluent un organe de serrage tel qu'une vis taraudée rapportée 36 et un insert de passage de cette vis réalisé dans le panneau pare-close 28 et un insert de passage de cette vis, avec filetage interne réalisé dans le panneau de plancher 27, par exemple au moyen d'inserts rapportés respectivement aux deux panneaux, le plancher étant en outre pourvu d'une entrée 37 d'accès à la tête de l'organe actif de serrage débouchant sur le passage et accessible depuis la paroi inférieure du plancher afin qu'un outillage puisse accéder à la tête de vis et la serrer jusqu'à sa venue en butée sur un alésage 38 prévu entre l'entrée 37 et le filetage 35, venue en butée correspondant à l'état actif de cet organe de serrage.

Les moyens de serrage seront prévus avec une limitation de leur couple de serrage à une faible valeur permettant cependant de bien écraser les cales d'écartement et assurer l'étanchéité, le serrage ne servant qu'à positionner les pièces, et non à passer les efforts qui transitent par le collage une fois la sous-structure autoportante définitivement collée.

Pour limiter le couple de serrage, et ne pas endommager les pièces, des organes de serrage avec vis en plastique, qui limitent le couple maximum de serrage, seront privilégiées. L'on pourra idéalement prévoir une tête de vis sécable au delà d'une valeur de seuil d'effort de serrage prédéterminée.

Le poids des éléments est supporté par les profils en contact via la colle et les cales d'écartement, et non par le système de serrage qui n'est pas prévu assez résistant pour assurer cette fonction, ou celle de la fixation d'un équipement du véhicule.

Dans une variante de réalisation illustrée en pointillé sur les figures 1 et 2, l'autre panneau (pare-close 28 dans l'exemple considéré) est également muni d'une entrée d'accès au passage 35 afin d'y insérer un organe de serrage alternatif susceptible d'être commandé depuis le côté du pare-close pour rapprocher les deux panneaux. Le fait de disposer de plusieurs localisations pour l'accès à l'organe de serrage permet d'avoir la liberté de choisir lequel sera le plus approprié pour le montage.

Pour assembler un panneau qui doit l'être à plusieurs panneaux précédemment assemblés en une sous-structure autoportante (par exemple les flans 32 et 33 des figures 7 et 8), ce panneau sera pourvu à chacune de ses portions venant en accostage avec les panneaux précédemment installés, de profil d'assemblage (bossage ou rainure) et d'organe de serrage (vis ou filetage) et le panneau en regard, du profil d'assemblage et de l'organe de serrage complémentaires.

Le positionnement précis (inclinaison et coordonnées) d'un panneau à assembler peut être obtenu à l'aide d'un seul panneau qui sera pourvu à cet effet de plusieurs profils et organes de serrage complémentaires du panneau à assembler (cas du positionnement du pare-close vis à vis du plancher) ou de plusieurs panneaux différents qui seront pourvus d'un ou plusieurs profils et organes de serrage complémentaires du panneau à assembler.

Le pare-close 28 et le plancher 27 devant être positionnés exactement perpendiculairement l'un de l'autre dans la structure définitive, et à des coordonnées X, Y, Z particulières, la vis et les inclinaisons des pans du bossage 31 et de la rainure 32 représentés sur la figure 2, et la vis et les inclinaisons des pans d'un ou plusieurs autres bossage(s) et rainure(s), non représentés, et ceux de l'unité arrière 29 qui est fixée à la fois au pare-close 28 et au plancher, sont dimensionnées de façon à disposer le pare-close 28 exactement perpendiculairement au plancher 27 et exactement aux coordonnées X, Y, Z particulières lorsque les têtes de vis 36 de ces moyens, arrivent en butée contre les alésages correspondants 38, dans l'état actif de ces organes de serrage 36.

Une fois que les deux panneaux sont correctement positionnés et maintenus dans cette position correcte grâce à l'inclinaison des pans du bossage et ceux de la rainure et les cales d'écartement, et que les organes de serrage occupent leur état actif, de la colle est injectée dans l'espace défini entre le bossage et la rainure et les cales 33 soit directement depuis une extrémité ouverte du profil étanche ainsi formé, soit via par exemple des conduits non représentés prévus au sein d'au moins un panneau et débouchant dans l'interstice entre les cales 33.

Le collage de la sous-structure peut également être réalisé en enduisant de colle un des panneaux à assembler avant d'actionner les moyens de serrage. L'évacuation de la colle excédentaire et de l'air emprisonné s'effectuant par les extrémités ouvertes des zones de collage, ou par les conduits prévus au sein d'au moins un panneau afin que les surfaces de collage soient entièrement enduites. Le pare-close 28 fixé au plancher 27 forment une sous structure autoportante à laquelle pourra être fixée le panneau suivant (l'unité 29), avec la même procédure que décrite ci-dessus, puis respectivement :
- les montants arrières 31 (figure 6)
- successivement les deux flans de carrosserie 32, 33 (figures 7 et 8)
- l'encadrement du pare-brise 34 (figure 9)
- le toit 35 (figure 10).

Selon une variante de réalisation préférée, le positionnement définitif et précis de chaque panneau n'est assuré que lorsque tous sont en place. C'est leur coopération et la redondance des systèmes de positionnement qui fait la robustesse du procédé d'assemblage. Par exemple, les flans peuvent repositionner le toit et le pare-close.

L'ordre d'assemblage peut également être 27, 28, 29, 31, 35 puis 35 et 34, les flans venant repositionner la voute formée par les autres éléments.

La colle est choisie avec un temps de séchage de l'ordre de quelques heures, permettant l'assemblage et le serrage des vis de maintien de tous les panneaux avant qu'elle ne durcisse complètement, ce qui laisse le temps le monter l'ensemble de la structure avant qu'elle ne durcisse.

### Panneaux constitutifs de la structure

Les panneaux constitutifs de la structure sont de préférence réalisés par la méthode dite RTM (Resin Transfer Molding ou moulage par transfert de résine). Pour cela, on réalise d'abord dans un moule un noyau en mousse rigide, par exemple en mousse de polyuréthane de la forme désirée. On réalise ensuite deux préformes qui constitueront les parois rigides de l'élément. Celles-ci sont de préférence en fibre de verre et peuvent être réalisées soit par déformation d'un mat, soit par projection des fibres avec adjonction d'un liant et formage à chaud.

Les parois sont de la forme qui convient pour être appliquées de part et d'autre de la mousse.

Les deux préformes sont ensuite placées de part et d'autre du noyau qui remplit ainsi l'espace ménagé entre elles. L'ensemble est ensuite placé dans un nouveau moule et on injecte de la résine dans les préformes, puis on effectue une polymérisation à chaud. On obtient ainsi le panneau dans lequel les deux parois 11 et 12 délimitent un espace contenant le matériau de remplissage 10.

D'autres méthodes peuvent être mises en oeuvre pour réaliser les panneaux de structure. Par exemple, on peut utiliser une technique dite de moussage "in situ" : on réalise d'abord deux préformes ou peaux que l'on assemble et on injecte ensuite la mousse dans l'espace interne. On peut aussi coller la mousse sur l'une des peaux et coller l'autre peau sur l'ensemble ainsi obtenu. Ces techniques sont connues en soi et ne seront pas davantage détaillées ici.

Ces panneaux sont caractérisés par :
- le fait qu'ils soient tous réalisés en matériaux composite
- qu'ils ont une épaisseur comprise entre 5 et 100 mm
- qu'ils comprennent des points de solidarisation l'un à l'autre par vissage permettant le serrage des panneaux l'un contre l'autre en vue du collage
- qu'ils comprennent un système d'auto-alignement des pièces par un profil adapté (avec un angle de X° par rapport à la direction de serrage) qui entre en fonction lorsque l'on serre les pièces.
- le fait que ce soit une paire de profils complémentaires (ou un ensemble de profils complémentaires) qui positionne les pièces suivant des inclinaisons et des positions X, Y, Z relatives garantit la précision extrême de ces inclinaisons/positionnement et rend inutile l'emploi de tout système de positionnement externe utilisé dans l'art antérieur).

### Fixation d'équipements du véhicule sur ces panneaux

Conformément notamment à la figure 13, l'invention concerne la fixation, sur un panneau de structure sandwich en matériaux composites 101, définissant deux peaux extérieures 102, 103 et un coeur de mousse 104, d'un organe de montage de type chape dans l'exemple illustré 106 et axe de chape 107.

Cet organe de montage sert à la fixation d'un équipement du véhicule automobile susceptible de solliciter ce panneau suivant une direction principale D, tel qu'un amortisseur sollicitant un panneau dans la direction de son cycle de compression/détente.

Cet organe peut servir bien à la fixation d'autres équipements du véhicule sur un tel panneau comme, par exemple : les charnières de portières, les poignées de maintien interne à l'habitacle et les supports de ceinture de sécurité. La direction principale D est la direction suivant laquelle la force exercée par l'équipement sur le panneau est optimale pour réaliser efficacement une action de traction/compression sur le panneau. Sur la figure 13, la direction principale D est sensiblement parallèle à l'axe de chape 107 comme indiquée par la ligne continue avec les doubles flèches.

Il est également possible de fixer des éléments quasi-mobiles, qui sont donc susceptibles de bouger, ou de transmettre des forces selon une direction variable d'une plage d'angles. Ainsi, la direction principale D peut varier de plus ou moins β= 20°, de préférence β= 10° comme indiqué par les lignes discontinues avec les doubles flèches sur la figure 13.

Plus particulièrement, il existe d'autres équipements du véhicule, qui sont susceptibles de solliciter ce panneau suivant plusieurs directions dans un plan principal DD, par exemple une fixation de triangle de suspension qui sollicite le panneau selon la direction longitudinale X, ainsi que selon la direction latérale Y dans la figure 13. Dans ce cas, les 2 directions de sollicitations forment un plan principal DD (représenté sur la figure 13).

Pour éviter de fragiliser le panneau du fait de la fixation de l'organe de montage, et de sa liaison avec un équipement lui faisant subir des efforts, l'invention prévoit de monter la chape 106 ou tout autre organe d'accroche de l'équipement, par l'intermédiaire d'une pièce rigide 108 définissant au moins deux embases 109 fixées en surfaces respectivement de deux parois de peau 111, 112 du panneau sensiblement parallèles à la direction de sollicitation du panneau par l'élément ou présentant une inclinaison d'un angle de plus ou moins α = 20°, de préférence α = 5° ou 10° par rapport à la direction principale D.

Plus particulièrement, au moins une embase 109 fixée en surface de parois du panneau est sensiblement parallèle au plan principal DD, ou présentant une inclinaison d'un angle de plus ou moins α = 20°, de préférence α = 5° ou 10° par rapport au plan principal DD.

Les embases 109 de la pièce rigide 108 sont fixées à la surface des parois de peau 111, 112 du panneau par collage.

Cette configuration permet de disposer la surface de collage dans le plan de l'effort principal pour faire travailler en traction/compression la peau du composite sandwich, et non en flexion sans ainsi pâtir de la faible résistance de la mousse à la compression, et en tirant profit des meilleures propriétés mécaniques des peaux 102, 103 vis à vis de celles de la mousse. Les efforts transmis au panneau par l'équipement via sa fixation sont ainsi répartis sur les surfaces de collage et non localisés ponctuellement, en étant orientés parallèlement aux peaux du panneau et en ne sollicitant que ces peaux, non la mousse ou dans une largement moindre mesure.

Les fibres de la peau seront avantageusement disposées également sensiblement parallèlement à la direction de sollicitation et ainsi parallèlement à l'un des côtés de l'embase.

Il se peut que les deux parois de peau sur lesquelles sont fixées les deux embases, soient réalisées par une seule plaque de peau mise en forme, telle qu'illustrée sur la figure 14.

Selon un mode de réalisation non représenté, l'organe de fixation n'a qu'une unique embase de collage, et il est collé sur une unique paroi du panneau. Tel est le cas lorsque, par exemple, l'axe de la vis de fixation de l'équipement est parallèle à cette paroi et au plan de collage. Il n'y a alors pas de moment de rotation généré par l'effort D et la peau travaille uniquement en traction/compression.
Selon un autre mode de réalisation, l'organe de montage comprend une pièce rigide définissant au moins une embase et un dispositif doté de moyens d'accroche de l'élément, solidarisé directement à la pièce rigide. Cette solidarisation directe sans pièce intermédiaire du moyen d'accroche à la pièce rigide augmente fortement la rigidité de l'organe de montage, qui rend la fixation plus sécurisée.

On décrit dans ce qui suit, différents exemples illustratifs de l'invention en référence aux figures :

### Figures 13, 15 et 16

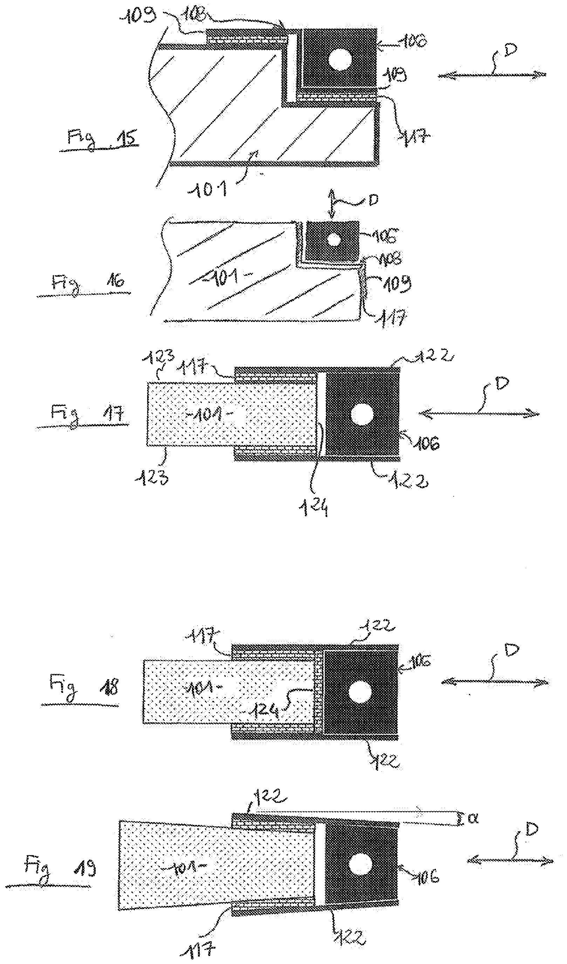

En référence à la figure 13, et à la figure 15, dans ce mode de réalisation, la pièce rigide 108 présente une section en escalier définissant deux marches formant les embases 109 et une contremarche 113 et le panneau est pourvu d'un bord périphérique de forme complémentaire.

En l'occurrence, la tranche du panneau est pourvue d'une réservation 114 de forme générale parallélépipédique définissant une surface supérieure horizontale interne 111, une surface en retrait perpendiculaire (ou sensiblement) 116 et la surface horizontale coïncidant avec la paroi inférieure 112 du panneau 101.

La pièce rigide à section transversale en forme d'escalier est fixée sur cette réservation.

Une chape 106 est fixée à cette pièce rigide avec sa tranche latérale fixée en surface de la contremarche 113 de la pièce rigide et les tranches d'extrémité de ses branches sont fixées en surface de la marche adjacente formant l'embase supérieure 109.

La fixation de la chape sur la pièce rigide s'effectue par exemple par soudure, préalablement au collage de la pièce rigide sur le panneau.

On dispose en fait d'un ensemble « pièce rigide + chape » (éventuellement axe de chape) déjà assemblé et solidarisé qu'il suffit de venir coller par ses embases sur les parois appropriées du panneau.

Les embases 109 sont fixées sur toute leur surface par collage 117 sur les parois correspondantes du panneau. On prévoit de la colle sur les embases et/ou les parois et la mise en place s'effectue par simple application des embases sur leurs parois respectives.

Une fois que le collage est sec, l'équipement peut être monté sur l'axe.

Conformément à la comparaison des figures 15 et 16, on adaptera soit le profil du panneau, et/soit la géométrie de la pièce rigide à la direction de sollicitation D pour toujours disposer les surfaces de colle parallèlement ou avec un angle compris entre 5 et 20° vis à vis de cette direction de sollicitation.

### Figure 14

Dans le mode de réalisation illustré sur la figure 14, la pièce rigide et l'organe forment une seule pièce, en l'occurrence une chape spécifique 118, spécifique puisque ses deux branches divergent l'une de l'autre d'un angle α inférieur à 20°, de préférence à 10°, et supérieur à 2°, de préférence à 5° en direction opposée à sa partie centrale 119.

Ces branches divergentes 118 constituent les embases 109 à fixer sur deux parois de même inclinaison 121 formées dans le panneau.

La partie centrale 119 de la chape forme le moyen d'accroche de l'élément.

La fixation de la chape sur les parois externes 121 du panneau s'effectue sur la zone de recouvrement entre les branches 118 et lesdites parois 121, ce recouvrement pouvant s'étendre sur tout ou partie de la surface de chaque branche 121.

La colle 117 est présente sur toute cette zone de recouvrement.

Cette chape spécifique 118 est particulièrement adaptée pour être montée sur une partie proéminente de panneau (voir figure) et la divergence de ses branches permet un maintien de la colle dans la zone de recouvrement lors de la fixation, une application des embases sur une paroi inclinée par rapport à la direction de rapprochement de la chape vers le panneau, étant moins susceptible de repousser la colle que l'application d'embases sur une paroi parallèle à la direction d'application.

### Figures 17 à 19

Dans les modes de réalisation de ces figures, la pièce rigide se présente sous la forme de deux plaques rigides 122 formant respectivement les deux embases collées en surface de deux parois 123 du panneau parallèles à la direction de sollicitation, prolongées chacune par une partie de plaque à fixer sur l'insert qui dans l'exemple illustré est une chape 106. Dans ce cas, la chape 106 peut être fixée sur les plaques par ses deux tranches latérales.

La figure 18 montre que l'on peut également coller la surface externe de la chape contre le bord frontal 124 en regard du panneau sans pour autant solliciter outre mesure la mousse du panneau puisque les efforts transiteront principalement via les surface de colle 117 parallèles à la direction de sollicitation D.

La figure 19 met en évidence que le fait que l'on puisse, comme pour la variante de réalisation de la figure 14, prévoir des parois de panneau et embases à coller dessus, inclinées d'un angle a compris entre 5 et 20° de préférence 10° pour garantir une bonne répartition de la colle lors de la fixation de l'ensemble « chape + plaques rigides » sur le panneau.

### Avantages de l'invention

L'invention telle que décrite ci-dessus présente différents avantages qui sont présentés ci-dessous :
Grâce à la formation de sous-structures de nombre de panneaux croissant tout au long du procédé d'assemblage, et qui sont rendues autoportantes, les outillages de l'art antérieur permettant de maintenir en position ou de serrer les panneaux les uns contre les autres, de type gabarit ou dispositif de serrage rapporté, deviennent superflus, ces fonctions étant intégrées au sein des panneaux eux mêmes, dès leur fabrication idéalement.

L'assemblage en est considérablement facilité et accéléré (pièces assemblables en 1h sans outils, sans considérer le séchage de la colle).

Les couts de fabrication des outillages sont limités et le châssis/carrosserie peut être assemblé n'importe où sans outillage spécifique et notamment en dehors des usines traditionnelles de fabrication de véhicule mais au sein de n'importe quelle micro-usine de fabrication (concessionnaire de voiture par exemple).

Il s'ensuit une simplification drastique de la conception automobile et un allégement du véhicule réalisé.

L'invention a été décrite en référence à la fabrication d'un ensemble carrosserie/châssis mais peut tout autant s'appliquer à tout autre type de structure les embarcations de navigation, les constructions du bâtiment, les meubles, ...

## Revendications

1. Structure autoportante formée par l'assemblage d'au moins deux panneaux de structure sandwich en matériaux composites, ces deux panneaux présentant respectivement deux parties d'assemblage aux profils complémentaires (31, 32) dotées chacune d'au moins un moyen de serrage des panneaux le long des profils complémentaires, ces moyens de serrage (35, 36) pouvant occuper un état actif de serrage maximum des deux panneaux, les parties d'assemblage étant profilées de façon que lorsque les moyens de serrage occupent l'état actif, les deux panneaux emboîtés présentent une forme tridimensionnelle correspondant à celle de ces deux panneaux dans la structure à réaliser, et forment une sous structure autoportante.

2. Structure selon la revendication 1, dans laquelle les moyens de serrage comprennent des organes complémentaires de serrage (35, 36).

3. Structure selon la revendication 2, dans laquelle au moins l'un (36) des deux moyens de serrage complémentaires est sécable au-delà d'un seuil d'effort prédéterminé.

4. Structure selon l'une des revendications précédentes, dans laquelle au moins l'un (35) des deux moyens de serrage complémentaires est formé d'une seule pièce avec le panneau.

5. Structure selon la revendication précédente, dans laquelle lorsque les moyens de serrage complémentaires sont des organes de serrage complémentaires, tels qu'une vis et un filetage, chaque partie d'assemblage de panneau comprend un insert de passage de l'organe actif, et au moins l'un des deux panneaux comprend une entrée (37) d'accès à la tête (36) de l'organe actif de serrage débouchant sur l'insert de passage, du panneau considéré et accessible depuis une paroi extérieure du panneau, l'insert de l'autre panneau étant pourvu d'un filetage interne.

6. Structure selon la revendication précédente, dans laquelle les parties d'assemblage (31, 32) des deux panneaux comprennent chacune une entrée d'accès à la tête de l'organe actif de serrage débouchant sur l'insert à filetage du panneau considéré.

7. Structure selon l'une des revendications précédentes, dans laquelle les parties d'assemblage des deux panneaux présentent des profils incluant au moins un chanfrein (41).

8. Structure selon l'une des revendications précédentes, dans laquelle les extrémités complémentaires des deux panneaux présentent des profils complémentaires définissant une partie mâle et une partie femelle.

9. Structure selon l'une des revendications précédentes, dans laquelle les moyens de serrage comprennent des cales d'écartement (33) des deux panneaux fixées sur les parties d'assemblage en regard des deux panneaux à assembler.

10. Structure selon l'une des revendications précédentes, comprenant une colle comme moyen de fixation définitif des panneaux à assembler comblant l'espace existant entre les deux parties d'assemblage des deux panneaux.

11. Structure selon l'une des revendications précédentes comprenant différents panneaux assemblés au moins deux à deux, et formant un ensemble de châssis et de carrosserie montée sur le châssis, d'un véhicule.

12. Panneau de structure sandwich en matériaux composites constitutif de la structure selon l'une quelconque des revendications précédentes, comprenant un filetage interne (35) et une entrée (37) débouchant au sein de ce filetage accessible depuis la peau extérieure du panneau, et une partie d'assemblage (31, 32) pourvue d'un profil de positionnement.

13. Procédé d'assemblage d'au moins deux panneaux selon la revendication précédente, pour former une structure tridimensionnelle autoportante, dans lequel :
- on forme une série de panneaux à assembler successivement, avec pour les deux parties de panneaux successifs à assembler se retrouvant en regard l'une de l'autre, des profils complémentaires d'assemblage, et des moyens complémentaires de serrage selon le profil complémentaire prédéfini
- on assemble un premier panneau avec le panneau successif en emboîtant les profils complémentaires des parties à assembler et en déplaçant les moyens de serrage à leur état actif pour former une sous structure autoportante,
- on injecte un moyen de fixation définitive assurant une fixation définitive d'un panneau à un autre après un durée prédéterminée et choisie légèrement supérieure à celle de l'assemblage de l'ensemble des panneaux de la structure, de préférence immédiatement après la formation de la sous-structure auto portante.
- on assemble de la même façon les autres panneaux jusqu'à l'obtention de la structure désirée.

14. Véhicule tel qu'un véhicule automobile pourvu de la structure tridimensionnelle autoportante selon les revendications 1-11, dans lequel des équipements fonctionnels sont fixés à la structure par des organes de montage.

## Patentansprüche

1. Selbsttragende Struktur, die gebildet wird durch die Montage von zumindest zwei Sandwichbauplatten aus Verbundmaterialien, wobei diese beiden Platten jeweils zwei Montagebereiche mit komplementären Profilen (31, 32) aufweisen, und die Montagebereiche jeweils mit zumindest einem der Plattenklemmmittel entlang der komplementären Profile versehen sind, wobei diese Klemmmittel (35, 36) an den beiden Platten in einen aktiven maximalen Klemmzustand versetzt werden können, wobei die Montagebereiche so profiliert sind, dass die beiden ineinander greifenden Platten im aktiven Zustand der Klemmmittel eine dreidimensionale Form aufweisen, die mit der Form der beiden Platten in der herzustellenden Struktur übereinstimmen, und eine selbsttragende Unterstruktur bilden.

2. Struktur nach Anspruch 1, in der die Klemmmittel zusätzliche Klemmelemente (35, 36) umfassen.

3. Struktur nach Anspruch 2, in der zumindest eines (36) der beiden komplementären Klemmmittel ab einer vorab festgelegten Kraftschwelle abtrennbar ist.

4. Struktur nach einem der vorhergehenden Ansprüche, in der zumindest eines (35) der beiden komplementären Klemmmittel mit der Platte ein einziges Stück bildet.

5. Struktur nach dem vorhergehenden Anspruch, in der jeder Montagebereich der Platte, wenn die komplementären Klemmmittel komplementäre Klemmelemente wie eine Schraube oder ein Gewinde sind, einen Einsatz zur Durchführung des aktiven Elements umfasst, und zumindest eine der beiden Platten einen Eingang (37) für den Zugang zum Kopf (36) des aktiven Klemmelements aufweist, der zum Durchführungseinsatz der jeweiligen Platte führt und von einer Außenwand der Platte aus zugänglich ist, wobei der Einsatz der anderen Platte mit einem Innengewinde versehen ist.

6. Struktur nach dem vorhergehenden Anspruch, in der die Montagebereiche (31, 32) der beiden Platten jeweils einen Eingang für den Zugang zum Kopf des aktiven Klemmelements umfassen, der zum Gewindeeinsatz der jeweiligen Platte führt.

7. Struktur nach einem der vorhergehenden Ansprüche, in der die Montagebereiche der beiden Platten Profile aufweisen, die zumindest eine Abfasung (41) einschließen.

8. Struktur nach einem der vorhergehenden Ansprüche, in der die komplementären Enden der beiden Platten komplementäre Profile aufweisen, die einen Steckbereich und einen Aufnahmebereich abgrenzen.

9. Struktur nach einem der vorhergehenden Ansprüche, in der die Klemmmittel Abstandsstücke (33) für die beiden Platten umfassen, die an den Montagebereichen gegenüber der beiden zu montierenden Platten befestigt sind.

10. Struktur nach einem der vorhergehenden Ansprüche, welche als endgültiges Befestigungsmittel der zu montierenden Platten einen Kleber umfasst, der den Raum zwischen den beiden Montagebereichen der beiden Platten ausfüllt.

11. Struktur nach einem der vorhergehenden Ansprüche, welche verschiedene zumindest paarweise montierte Platten umfasst, und eine Rahmen- und Karosseriebaugruppe bildet, die auf den Rahmen eines Fahrzeugs montiert ist.

12. Sandwichbauplatte aus Verbundmaterialien, welche die Struktur nach einem der vorhergehenden Ansprüche bildet und ein Innengewinde (35) und einen Eingang (37) umfasst, der in das Innere dieses von der äußeren Schicht der Platte zugänglichen Gewindes führt, und einen Montagebereich (31, 32), der mit einem Positionierungsprofil versehen ist.

13. Verfahren zur Montage von zumindest zwei Platten nach dem vorhergehenden Anspruch, um eine selbsttragende dreidimensionale Struktur zu bilden, in der:
- man eine Reihe von nacheinander zu montierenden Platten bildet, mit komplementären Montageprofilen für die beiden einander gegenüberstehen Bereiche der hintereinander zu montierenden Platten, und komplementären Klemmmitteln entsprechend dem vorab festgelegten komplementären Profil;
- man eine erste Platte an die nachfolgende Platte durch Ineinanderschieben der komplementären Profile der Montagebereiche und durch Verschieben der Klemmmittel in ihren aktiven Zustand zwecks Bildung einer selbsttragenden Unterstruktur montiert,
- man ein Mittel einspritzt, dass nach einer bestimmten Dauer eine endgültige Befestigung einer Platte an der anderen gewährleistet, wobei die Dauer so ausgewählt wird, dass sie etwas länger als die Dauer der Montage aller Platten der Struktur ist, und vorzugsweise bis unmittelbar nach der Bildung der selbsttragenden Unterstruktur dauert;
- man auf die gleiche Weise die anderen Platten montiert, bis die gewünschte Struktur erhalten wird.

14. Fahrzeug wie zum Beispiel ein Kraftfahrzeug, versehen mit der dreidimensionalen selbsttragenden Struktur gemäß den Ansprüchen 1 bis 11, in der funktionale Ausstattungen durch Montageelemente an der Struktur befestigt sind.

## Claims

1. A self-supporting structure formed by assembling at least two composite material sandwich structure panels, said two panels respectively having two assembly portions with complementary profile elements (31, 32) that each have at least one means for clamping the panels that is located along the complementary profile elements, said clamping means (35, 36) being capable of occupying an active state for a maximum clamping of the two panels, the assembly portions being profiled such that when the clamping means occupy the active state, the two interlocked panels have a three-dimensional shape corresponding to that of said two panels in the structure to be created, and form a self-supporting substructure.

2. A structure according to claim 1, wherein the clamping means comprise complementary clamping members (35, 36).

3. A structure according to claim 2, wherein at least one (36) of the two complementary clamping means is divisible beyond a predetermined force threshold.

4. A structure according to one of the preceding claims, wherein at least one (35) of the two complementary clamping means is formed in one piece with the panel.

5. A structure according to the preceding claim, wherein when the complementary clamping means are complementary clamping members, such as a screw and a thread, each panel assembly portion comprises an insert for the passage of the active member, and least one of the two panels comprises an inlet (37) for access to the head (36) of the active clamping member opening on the passage insert, of the respective panel and accessible from an outer wall of the panel, with the insert of the other panel being provided with an internal thread.

6. A structure according to the preceding claim, wherein the assembly portions (31, 32) of the two panels each comprise an inlet for access to the head of the active clamping member opening on the threaded insert of the considered panel.

7. A structure according to one of the preceding claims, wherein the assembly portions of the two panels have profile elements including at least one chamfer (41).

8. A structure according to one of the preceding claims, in which the complementary ends of the two panels have complementary profile elements defining a male portion and a female portion.

9. A structure according to one of the preceding claims, wherein the clamping means comprise spacers (33) of the two panels fixed to the assembly portions opposite the two panels to be assembled.

10. A structure according to one of the preceding claims, comprising an adhesive as the final fixing means of the panels to be assembled filling the space between the two assembly portions of the two panels.

11. A structure according to one of the preceding claims comprising different panels assembled together at least in pairs, and forming an assembly of a chassis and a body mounted on the chassis of a vehicle.

12. A composite material sandwich structure panel constituting the structure according to any one of the preceding claims, comprising an internal thread (35) and an inlet (37) opening within said thread accessible from the outer skin of the panel, and an assembly portion (31, 32) provided with a positioning profile element.

13. A method for assembling at least two panels according to the preceding claim, to form a self-supporting three-dimensional structure, wherein:
- a series of panels to be assembled in a sequence is formed with the two portions of successive panels to be assembled being positioned opposite each other, having complementary assembly profile elements and complementary clamping means according to the predefined complementary profile element
- a first panel is assembled with the successive panel by interlocking the complementary profile elements of the portions to be assembled and moving the clamping means to their active state to form a self-supporting substructure,
- a final attaching means is injected to ensure the final attaching of a panel to another after a predetermined time and so selected as to be slightly greater than that of the assembly of all the panels of the structure, preferably immediately after the self-supporting substructure is formed,
- the other panels are assembled in the same way until the desired structure is obtained.

14. A vehicle such as a motor provided with the three-dimensional self-supporting structure according to claims 1-11, wherein functional equipment is attached to the structure by mounting members.
